# EUROPÄISCHE PATENTSCHRIFT

(11) **EP 1 002 323 B1**
(45) Veröffentlichungstag und Bekanntmachung des Hinweises auf die Patenterteilung: **04.05.2005**
(21) Anmeldenummer: 98945126.5
(22) Anmeldetag: 31.07.1998
(51) Int. Cl.: H01B 3/30, H01B 13/06

(54) **TEILENTLADUNGSBESTÄNDIGE BESCHICHTUNG FÜR LACKDRÄHTE**
COATING WHICH IS RESISTANT TO PARTIAL DISCHARGES, FOR ENAMELLED WIRE
REVETEMENT RESISTANT AUX DECHARGES PARTIELLES DESTINE AUX FILS LAQUES

(30) Priorität: 06.08.1997 DE 19734003; 27.03.1998 DE 19813667; 17.07.1998 DE 19832186
(43) Veröffentlichungstag der Anmeldung: 24.05.2000
(73) Patentinhaber: Altana Electrical Insulation GmbH, 46483 Wesel (DE)
(72) Erfinder: LIENERT, Klaus-Wilhelm, D-22763 Hamburg (DE); SCHMIDT, Gerold, D-22145 Hamburg (DE); LEHMANN, Helmut, D-21465 Reinbek (DE)
(74) Vertreter: Fitzner, Uwe, Dr.
(86) Internationale Anmeldenummer: PCT/EP1998/004783
(87) Internationale Veröffentlichungsnummer: WO 1999/008288

(56) Entgegenhaltungen:
- EP-A- 0 072 223
- EP-A- 0 076 579
- EP-A- 0 660 336
- WO-A-96/42089
- US-A- 3 287 311
- US-A- 4 448 918
- US-A- 4 493 873
- DATABASE INSPEC INSTITUTE OF ELECTRICAL ENGINEERS, STEVENAGE, GB Inspec No. an=453847, 1992 HENK P.O. ET ALL.: "The influence of various fillers in epoxy plastics on the resistance to partial discharges." XP002085025 & VASTERAS, Bd. 4, Nr. 2, 1992, Seiten 1-7, Sweden

## Beschreibung

Die vorliegende Erfindung betrifft eine neue Beschichtung für Lackdrähte mit mindestens einem Drahtbeschichtungsmittel, enthaltend übliche Drahtlackbindemittel sowie Zusätze um die Teilentladungsbeständigkeit des aus dem Lack hergestellten Lackdrahtes zu verbessern.

Beschichtungen für Lackdrähte haben häufig einen zwei- oder mehrschichtigen Aufbau mit mindestens einer Grundlackschicht und mindestens einer Decklackschicht.

Die heute üblicherweise hierfür eingesetzten Drahtbeschichtungsmittel stellen im allgemeinen Lösungen der typischen Bindemittel, wie beispielsweise Polyester. Polyesterimide, Polyurethanharze und Polyamidimiden in Lösemitteln, gegebenenfalls. in Kombination mit handelsüblichen Kohlenwasserstoffverschnitten dar. Nach dem Aufbringen und Aushärten erhält man gut haftende, thermisch und mechanisch vollwertige Lackfilme. Die Polymere dieser Filme selbst sind nur wenig beständig gegenüber Teilentladungen, die ab einer bestimmten Feldstärke an der Drahtoberfläche auftreten.

Teilentladungen, die durch lokal auftretende hohe Feldstärken am Draht entstehen, zerstören den isolierenden Drahtlackfilm. Der Einbau von anorganischen Komponenten in den Polymerfilm führt zu einer Verlängerung der Lebensdauer, wohl durch die Vergleichmäßigung der Entladung. Diese Erkenntnis hat dazu geführt, daß verschiedene Lacksysteme, die mehr oder minder stark mit oxidischen Stoffen gefüllt sind, als Drahtlacke publiziert wurden.

In der EP 0 768 680 und in der EP 0 768 679 werden Lackdrähte beschrieben die als Bindemittelkomponente für den Drahtlack ein Thioetheracrylatsilan, hergestellt aus Tris (2-hydroxyethyl)-isocyanurattriacrylat, 3-Mercaptopropylmethyldimethoxysilan, Tetraethoxysilan, sowie SiO₂ als Füllstoff enthalten. Die Teilentladungsfestigkeit wird als gut beschrieben. Die thermischen und mechanischen Eigenschaften dürften einem Standardlackdraht überhaupt nicht entsprechen.

In der EP 356929 und in der US 4 935 302 werden Formulierungen beschrieben die, bei unterschiedlichen Bindemitteln, als Füllstoffe Cr₂O₃ oder Fe₂O₃ enthalten. Beide Pigmente haben ein hohes spezifische Gewicht und die Formulierungen neigen zu einer starken Sedimentation, was zu beim Lackieren zu Schwierigkeiten und im eingebrannten Lackfilm zur ungleichmäßigen Verteilung der Pigmente führt.

In den US 4 760 296, US 4 493 873, US 4 537 804 werden Formulierungen beschrieben. die als Pigment Al₂O₃ enthalten. Die starke abrasive Wirkung des Oxids auf die Lackierdüsen, die in einer Lackiermaschine auf wenige mµ genau aufeinander eingestellt werden müssen, wirkt sich ungünstig auf die Rundheit der Drähte sowie auf die Oberflächengüte aus.

In der CA 1 168 857 wird ähnlich wie in der US 4 760 296 der Einsatz von Al₂O₃ beschrieben, wobei auch SiO₂ zu Einsatz kommt. Es gilt das für die US 4 760 296 gesagte.

In der JP 59 17 63 63 wird ein Draht beschrieben, der aus einem vernickelten Cu-Kern besteht, der mit einem Polyimidlack, gefüllt mit kalcinierter Tonerde und Glimmerpulver, lackiert ist. Das Verfahren ist aufwendig und der Lack, wegen des geringen Festkörpers des Polyimids, unwirtschaftlich.

In der US 3 553 282 wird die Verwendung von silikonmodifizierten Polyamidocarbonsäuren beschrieben. Die erhalten polyimidbeschichteten Drähte sind für den normalen Einsatzzweck overengineert und außerdem extrem teuer.

In der WO 96/42089 werden Lackdrähte beschrieben, die mit einem TiO₂-haltigen Beschichtungsmitteln einschichtig isoliert sind. Sie sind stabiler gegenüber Teilentladungen als Lackdrähte, welche mit entsprechenden TiO₂-freien Beschichtungsmitteln einschichtig isoliert sind, indes läßt ihr anwendungstechnisches Eigenschaftsprofil insgesamt noch zu wünschen übrig.

Die der vorliegenden Erfindung zugrundeliegende Aufgabe besteht somit darin, eine neue Beschichtung für Lackdrähte mit Drahtlacken, enthaltend übliche Drahtlackbindemittel, Lösemittel, Katalysatoren und Additive, zur Verfügung zu stellen, die die Nachteile der bisher bekannten Beschichtungen vermeidet, einfach und kostengünstig herzustellen und zu verarbeiten ist.

Die für die Herstellung der erfindungsgemäßen Beschichtung verwendeten Drahtlacke sollten lagerstabil sein, eine gute Haftung insbesondere auf Kupferdrähten, einen möglichst hohen Wärmedruck sowie einen ausreichenden Wärmeschock ausweisen. Außerdem sollen die Drahtlacke einen möglichst hohen Festkörpergehalt bei einer für die Verarbeitung günstigen Viskosität aufweisen. Mit der erfindungsgemäßen Beschichtung sollte eine erhebliche Verbesserung der Teilentladungsbeständigkeit sollte erzielt werden.

Diese Aufgabe wird überraschend durch dadurch gelöst, daß man eine neue Beschichtung verwendet, welche mindestens eine Grundlackschicht und mindestens eine Decklackschicht aufweist, wobei mindestens eine Decklackschicht Titandioxid enthält der Drahtlack geringe Zusätze pyrogener Kieselsäure in einer Menge bis zu 20 Gew.-%, bezogen auf Titandioxid, enthält. Vorteilhafterweise besteht die neue Beschichtung aus einer Grundlackschicht und einer TiO₂-haltigen Decklackschicht indem der Drahtlack geringe Zusätze pyrogener Kieselsäure in einer Menge bis zu 20 Gew.-%, bezogen auf Titandioxid, enthält.

Die erfindungswesentliche TiO₂-haltige Decklackschicht wird aus einem TiO₂-haltigen Drahtlack hergestellt, worin als Bindemittel ein Polyamidimid verwendet wird, wobei der Hinweis gemacht werden muß, daß sich die Erfindung nicht nur auf dieses Drahtlackbindemittel, sondern auch auf Polyester. Polyestermide, Polyurethanharze u.a. erstreckt. Polyamidimide sind bekannt und beispielsweise in US-A-3 554 984, DE-A-24 41 020, DE-A-25 56 523, DE-A-12 66 427 und DE-A-19 56 512 beschrieben. Die Herstellung der Polyamidimide erfolgt in bekannter Weise aus Polycarbonsäuren oder deren Anhydriden, bei denen zwei Carboxylgruppen in vicinaler Stellung stehen und die mindestens noch eine weitere funktionelle Gruppe besitzen müssen und aus Polyaminen mit wenigstens einer primären, zur Imidbindung fähigen Aminogruppe. Statt der Amingruppe kann eine Isocyanatgruppe zur Bildung des Imidringes verwendet werden. Die Polyamidimide können auch durch Umsetzung von Polyamiden, Polyisocyanaten, die mindestens zwei NCO-Gruppen enthalten, und cyclischen Dicarbonsäureanhydriden, die mindestens eine weitere kondensations- oder additionsfähige Gruppe enthalten, gewonnen werden.

Als oxidisches Pigment für die erfindungsgemäße Drahtbeschichtung wird Titandioxid eingesetzt. Überraschenderweise führt dessen Einsatz in der erfindungsgemäßen Formulierung zu keinem Abfall der thermischen und mechanischen Eigenschaften des Drahtlackes bzw. der Decklackschicht. Ebenso überraschend ist es, daß eine erhebliche Verbesserung der Lebensdauer unter Bedingungen der Teilentladung für den Lackdrahtfilm erzielt wird.

Vorzugsweise können die erfindungsgemäß für die Herstellung der Decklackschicht zu verwendenden Drahtlackformulierungen 5 bis 30 Gew.% Titandioxid, bezogen auf das organische Bindemittel, enthalten. Besonders bevorzugt sind 10 bis 20 Gew.%.

Vorteilhaft für das Sedimentationsverhalten des erfindungsgemäß zu verwendenden Drahtlacks haben sich geringe Zusätze von pyrogener Kieselsäure erwiesen. Vorzugsweise können in den erfindungsgemäß zu verwendenden Drahtlackformulierungen bis zu 20 Gew.% pyrogener Kieselsäure, bezogen auf das Titandioxid, enthalten sein. Besonders bevorzugt sind bis zu 10 Gew. % pyrogener Kieselsäure.

Vorteilhafterweise können die erfindungsgemäß zu verwendenden Drahtbeschichtungsmittel 0,5 bis 5,0 Gew.% eines Phenolharzes oder eines Melaminharzes enthalten. Besonders vorteilhaft sind Gehalte von bis zu 4,0 Gew.%. Bewährt haben sich ebenfalls handelsübliche fluorierte Additive.

Für die Herstellung der Grundlackschicht(en) der erfindungsgemäßen Beschichtungen können die üblichen und bekannten TiO₂-freien Drahtlacke verwendet werden, welche als Bindemittel Polyester, Palyestermide, Polyurethanharze oder Polyamidimide enthalten.

### Beispiele

### 1.1 Herstellung eines Polyamidimidlackes

Bei einer Temperatur von kleiner 30°C werden 38.5 g Trimellithsäureanhydrid, 60.0 g Diphenylmethandiisocyanat und 73.5 g N-Methylpyrrolidon gemischt. Mit 10°C pro Stunde wird auf 150°C hochgeheizt. Bei dieser Temperatur wird der Ansatz so lange gehalten, bis kein Kohlendioxid mehr entsteht. Das Reaktionsprodukt wird mit einem 2:1 Gemisch von N-Methylpyrrolidon und Xylol verdünnt. Der erhaltene Drahtlack hat einen Festkörpergehalt von 35% bei einer Viskosität von 700 mPas bei 23°C.

### 1.2 Herstellung eines erfindungsgemäß zu verwendenden Drahtlackes für die Herstellung der Decklackschicht

25.10 g des Lackes aus Beispiel 1 werden mit 4.70 g eines handelsüblichen Titandioxides und 0.48 g pyrogener Kieselsäure in einem in der Lackindustrie üblichen Verfahren verpastet. Mit 64.4 g Lack aus Beispiel 1 wird aufgelackt und dann mit einem Gemisch aus N-Methylpyrrolidon und Xylol auf Viskosität eingestellt.

| | |
|---|---|
| Viskosität bei 23°C | 965 mPas |
| Festkörpergehalt (1g, 1h, 200°C) | 37.8 % |
| 1.3 | Lackierung und Ausprüfung |

### Lackierbedingungen :

### Grundlack - handelsüblicher Polyesterimiddrahtlack

### Decklack - Lack aus Beispiel 1.2

| | |
|---|---|
| Ofen | MAG AW/1A |
| Temperatur | 520°C |
| Auftragssystem | Düsen |
| Drahtdurchmesser | 0.71 mm |
| Abzugsgeschwindigkeit | 34 m/min |
| Zahl der Durchzüge | |
| Grundlack | 8 |
| Decklack | 2 |

Die lackierten Drähte wurden nach IEC 851 geprüft.

| | |
|---|---|
| Zunahme | 0.069 - 0.074 mm |
| Außenfaserdehnung | 1*d + 30 % |
| Wärmeschock | 1*d bei 300°C i.O. |
| Wärmedruck | 370°C |
| tg delta Steilanstieg | 194°C |

Das Eigenschaftsniveau entspricht einem handelsüblichen Zweischichtlackdraht.

### Teilentladungsbeständigkeitsprüfung

Als Probekörper wurden IEC-Twiste verwendet. Die Prüfspannung betrug 4.5 kV bei 50 Hz (sinus). Die Twiste wurden bei 140°C gelagert und die Zeit bis zum Ausfall bestimmt.

Verglichen wurden Drähte, die mit einem konventionellen Decklack, z.B. aus Beispiel 1.1, hergestellt wurden, mit Drähten die die erfindungsgemäße Beschichtung mit einer Decklackschicht, hergestellt mit dem Decklack aus Beispiel 1.2. als Overcoat haben.

Die mittlere Lebensdauer der mit der erfindungsgemäßen Beschichtung beschichteten Drähte ist etwa um den Faktor 43 größer als die Lebensdauer der Drähte die mit einem konventionellen Lack berichtet wurden.

## Patentansprüche

1. Beschichtung für Lackdrähte mit mindestens einer Grundlackschicht und mindestens einer Decklackschicht **dadurch gekennzeichnet, daß** mindestens eine Decklackschicht Titandioxid enthält und der Drahtlack geringe Zusätze pyrogener Kieselsäure in einer Menge bis zu 20 Gew.-%, bezogen auf Titandioxid, enthält.

2. Die Beschichtung nach Anspruch 1 **dadurch gekennzeichnet, daß** sie aus einer Grundlackschicht und einer Decklackschicht besteht.

3. Die Beschichtung nach Anspruch 1 oder 2, **dadurch gekennzeichnet, daß** die Decklackschicht aus einem Drahtlack herstellbar ist, der 5 bis 30 Gew.-% Titandioxid, bezogen auf Bindemittel, enthält.

4. Die Beschichtung nach Anspruch 3, **dadurch gekennzeichnet, daß** der Drahtlack 10 bis 20 Gew.-% Titandioxid, bezogen auf Bindemittel, enthält.

5. Die Beschichtung nach einem der Ansprüche 1 bis 4, **dadurch gekennzeichnet, daß** der Drahtlack bis zu 10 Gew.-% pyrogene Kieselsäure, bezogen auf Titandioxid, enthält.

6. die Beschichtung nach einem der Ansprüche 1 bis 5, **dadurch gekennzeichnet, daß** der Drahtlack einen Festkörpergehalt von 20 bis 50 Gew.-% hat.

7. Die Beschichtung nach einem der Ansprüche 1 bis 6, **dadurch gekennzeichnet, daß** der Drahtlack eine Viskosität von 200 bis 2000 mPas bei 23°C hat.

8. Die Beschichtung nach einem der Ansprüche 1 bis 7, **dadurch gekennzeichnet, daß** der Drahtlack 0,5 bis 5,0 Gew.-% eines Phenolharzes oder eines Melaminharzes enthält.

9. Die Beschichtung nach Anspruch 8, **dadurch gekennzeichnet, daß** der Drahtlack bis zu 4,0 Gew.-% eines Phenolharzes oder eines Melaminharzes enthält.

10. Lackdrähte, enthaltend eine Beschichtung gemäß einem der Ansprüche 1 bis 9.

## Claims

1. Coating for enamelled wires comprising at least one base coat and at least one top coat, **characterized in that** at least one top coat comprises titanium dioxide and the wire enamel contains small additions of pyrogenic silica in an amount of up to 20% by weight, based on titanium dioxide.

2. Coating according to Claim 1, **characterized in that** it consists of a base coat and of a top coat.

3. Coating according to Claim 1 or 2, **characterized in that** the top coat can be produced from a wire enamel which contains from 5 to 30% by weight, based on binder, of titanium dioxide.

4. Coating according to Claim 3, **characterized in that** the wire enamel contains from 10 to 20% by weight, based on binder, of titanium dioxide.

5. Coating according to any of Claims 1 to 4, **characterized in that** the wire enamel contains up to 10% by weight, based on titanium dioxide, of pyrogenic silica.

6. Coating according to any of Claims 1 to 5, **characterized in that** the wire enamel has a solids content of from 20 to 50% by weight.

7. Coating according to any of Claims 1 to 6, **characterized in that** the wire enamel has a viscosity of from 200 to 2000 mPa.s at 23°C.

8. Coating according to any of Claims 1 to 7, **characterized in that** the wire enamel contains from 0.5 to 5.0% by weight of a phenol resin or of a melamine resin.

9. Coating according to Claim 8, **characterized in that** the wire enamel contains up to 4.0% by weight of a phenol resin or of a melamine resin.

10. Enamelled wires comprising a coating according to any of Claims 1 to 9.

## Revendications

1. Revêtement pour fils émaillés comportant au moins une couche de peinture de fond et au moins une couche de peinture de finition, **caractérisé en ce qu'**au moins une couche de peinture de finition contient du dioxyde de titane et la peinture pour fil contient de faibles additions d'acide silicique pyrogéné, en une quantité allant jusqu'à 20 % en poids, par rapport au dioxyde de titane.

2. Revêtement selon la revendication 1, **caractérisé en ce qu'**il consiste en une couche de peinture de fond et une couche de peinture de finition.

3. Revêtement selon la revendication 1 ou 2, **caractérisé en ce que** la couche de peinture de finition peut être produite à partir d'une peinture pour fil qui contient de 5 à 30 % en poids de dioxyde de titane, par rapport au liant.

4. Revêtement selon la revendication 3, **caractérisé en ce que** la peinture pour fil contient de 10 à 20 % en poids de dioxyde de titane, par rapport au liant.

5. Revêtement selon l'une quelconque des revendications 1 à 4, **caractérisé en ce que** la peinture pour fil contient jusqu'à 10 % en poids d'acide silicique pyrogéné, par rapport au dioxyde de titane.

6. Revêtement selon l'une quelconque des revendications 1 à 5, **caractérisé en ce que** la peinture pour fil a une teneur en matière solide de 20 à 50 % en poids.

7. Revêtement selon l'une quelconque des revendications 1 à 6, **caractérisé en ce que** la peinture pour fil a une viscosité de 200 à 2 000 mPa.s à 23°C.

8. Revêtement selon l'une quelconque des revendications 1 à 7, **caractérisé en ce que** la peinture pour fil contient de 0,5 à 5,0 % en poids d'une résine phénolique ou d'une résine mélamine.

9. Revêtement selon la revendication 8, **caractérisé en ce que** la peinture pour fil contient jusqu'à 4,0 % en poids d'une résine phénolique ou d'une résine mélamine.

10. Fils émaillés, comportant un revêtement selon l'une quelconque des revendications 1 à 9.
